Europäisches Patentamt

European Patent Office

Office européen des brevets

(11) Publication number: **0 001 454**
B1

# EUROPEAN PATENT SPECIFICATION

(45) Date of publication of patent specification: **02.06.82**

(21) Application number: **78101114.3**

(22) Date of filing: **10.10.78**

(51) Int. Cl.³: **A 01 N 31/14,**
**A 01 N 53/00, C 07 C 43/12**

(54) Arthropodicidal compositions, formulations containing such compositions and the use of such compositions or formulations in controlling pests.

(30) Priority: **11.10.77 GB 4226177**

(43) Date of publication of application:
**18.04.79 Bulletin 79/8**

(45) Publication of the grant of the patent:
**02.06.82 Bulletin 82/22**

(84) Designated Contracting States:
**BE CH DE FR GB NL SE**

(56) References cited:
GB - A - 1 443 533
US - A - 2 929 760
US - A - 3 899 586

CHEMICAL ABSTRACTS, vol. 84, 54885V
(1976)

(73) Proprietor: **THE WELLCOME FOUNDATION LIMITED**
**183-193 Euston Road**
**London NW1 2BP (GB)**

(72) Inventor: **Chadwick, Peter Robin**
**26 Castle Hill**
**Berkhamsted Herts (GB)**
Inventor: **Malone, James Carruthers**
**7, Nettledon**
**Hemel Hempstead Herts (GB)**
Inventor: **Dixon, Kay**
**2, Terriers End**
**Tring Herts (GB)**

(74) Representative: **Berg, Wilhelm, Dr. et al.**
**Dr. Berg, Dipl.-Ing. Stapf, Dipl.-Ing. Schwabe, Dr.**
**Dr. Sandmair Patentanwälte Postfach 860245**
**D-8000 München 86 (DE)**

Courier Press, Leamington Spa, England.

# Arthropodicidal compositions, formulations containing such compositions and the use of such compositions or formulations in controlling pests

This invention relates to novel arthropodicidal compositions, formulations containing such compositions, and to the use of such compositions or formulations in controlling pests of the Phylum Arthropoda.

The compound bis(2,3,3,3-tetrachloro-n-propyl) ether (hereinafter called the "Compound") is known from U.K. Patent No. 795 918 to synergise the insecticidal activity of the pyrethrins and of allethrin; and from Scientific Pest Control, Volume 31, pages 86—90 the Compound is also known to synergise the insecticidal activity of tetramethrin. Although the Compound itself possesses some pesticidal activity, it is mainly known as a pyrethroid synergist to render the use of expensive pyrethroid pesticides more economic. For this purpose amounts of the Compound in the range of from 1:1 w/w to 1:10 w/w, ratio pyrethroid (or of 'pyrethrins') to synergist, have been recommended.

The compound bis(2,3,3,3-tetrachloro-n-propyl)ether may be prepared as described in Japanese Patent Application, Publication No. 77/016089.

It has now been found that the Compound is capable of lowering the effect on humans of certain irritant properties of the synthetic pyrethroids:

5-benzyl-3-furylmethyl($\pm$)-cis (1R, 3S, E) - 2,2 - dimethyl - 3 - (2 - oxo - 2,3,4,5 - tetrahydro - 3 - thienylidenemethyl)cyclopropanecarboxylate (kadethrin), described in U.K. Patent No. 1 308 650, and

(—) - $\alpha$ - cyano - 3 - phenoxybenzyl - 2,2 - dimethyl(+) - cis - 3R - (2,2 - dibromovinyl)cyclopropane-IR - carboxylate (decamethrin), described in U.K. Patent No. 1 448 228 [hereinafter referred to as the "Esters"]. Concentrations of the Compound which may be used to lower the irritant effect on humans of pyrethroids lie in the range of from 1:0.5 w/w to 1:50 w/w, ratio pyrethroid to the Compound.

The irritant effect of the Esters on humans may result in several symptoms which include ocular irritancy such as watering of the eyes; nasal irritancy such as running of the nose, sneezing and the perception of an unpleasant smell; irritation of the pharynx such as coughing and a dry throat; buccal irritancy such as a dry mouth and numbed lips; dermal irritancy; and lingual irritancy such as a sensation of a tingling of the tongue. When the Esters are used in combination with the Compound, there is a reduction in both the degree and the frequency of occurrence of such symptoms.

A composition of the present invention containing the Ester decamethrin is of particular value as a killing agent, and its knock-down activity may be enhanced by the inclusion in the composition of a further pyrethroid having potent knock-down properties. Such compounds include kadethrin, ($\pm$)-allethrolonyl-(+)-trans-chrysanthemate (bioallethrin) and (—)-allethrolonyl-(+)-trans-chrysanthemate (S-bioallethrin).

On the other hand, as indicated above, kadethrin is itself a particularly good knock-down agent, and its lethal properties may be enhanced by including in compositions of this invention a more lethal agent preferably having good residual properties. Such compounds include decamethrin, 5 - benzyl - 3 - furylmethyl - (+) - trans - chrysanthemate (bioresmethrin), 3-phenoxy-benzyl-($\pm$)-cis, trans - 2,2 - dimethyl - 3 - (2,2 - dichlorovinyl)cyclopropane - 1 - carboxylate (permethrin) and 3-phenoxybenzyl-(+)-cis, trans-chrysanthemate (D-phenothrin).

The effectiveness of the compositions of this invention may be enhanced by combination with a pyrethroid synergist well known in the art. Such synergists include piperonyl butoxide, piprotal, sulfoxide, n-propyl isome and octylbicycloheptenedicarboximide (MGK 264®) (see Chemie der Pflanzenschutz und Schädlingsbekampfungsmittel, Vol. 1, Wegler (Springer), p 101).

The compositions of this invention may be used to control pests of the Phylum Arthropoda, especially flying and crawling members of the Class Insecta, in particular mosquitoes, cockroaches and house-flies.

The compositions of this invention may be used for such purposes as a simple mixture of the active ingredients or, preferably, may be presented as an arthropodicidal formulation in combination with one or more of the following:— wetting, dispersing, surface-active, stabilising, thickening or emulsifying agents, or other standard solvents, propellants, diluents, inerts or carriers used and known in the art when formulating pesticides.

Dusting powders may be prepared by intimate admixture of the active ingredients with a powdered solid inert carrier. Suitable carriers include clays, silicas, kaolin, talcs, powdered chalk, calcium carbonate, Fuller's Earth, gypsum, diatomaceous earths and vegetable carriers.

Spray formulations of this invention may comprise a solution in an organic solvent or a suspension in water prepared either from a water miscible oil or a water dispersible powder. The miscible oil or wettable powder comprises a mixture of the active ingredients with or without an organic solvent and one or more emulsifiers. The spray may be presented either as a pure solution, a water-based emulsion, an oil-based emulsion or a suspension. The spray formulations of this invention may be applied to the arthropod pests by means well known in the art such that the droplet size and dispersion of the spray depends on the mechanical device employed. Coarse sprays may be applied manually by means of knapsack-sprayers or hand sprayers. Finer sprays may be obtained by utilising spinning-disc sprayers which may be applied at ground level or from above in order to effect extensive aerial coverage of the environment involved. Such machines depending upon rotary atomisation may be driven electrically or by propellers rotated by forward motion of the aircraft employed. Ultra-low volume and thermal fogging devices may also be utilised in order to present the spray compositions as dense clouds, fogs or mists.

Pressure packed formulations of this invention may be presented either as powder aerosols but preferably as liquid aerosols. Powder aerosols contain a mixture of the active ingredients, the Compound, optionally combined with a pyrethroid synergist, with a suitable solvent, propellant and co-solvent together with an inert finely divided solid carrier.

Liquid pressure-packed aerosol formulations consist of a mixture of the active ingredients together with a solvent and a propellant and with or without a co-solvent. Suitable solvents include chlorinated hydrocarbons such as methylenechloride or 1,1,1-trichloroethane, hydrocarbons of suitable volatility such as isopentane or cyclohexane, esters and alcohols. Propellants include volatile liquids, gases liquified under pressure and gases dissolved under pressure in the solvent. The most commonly used volatile liquid propellants are fluorinated chlorinated hydrocarbons such as fluorodichloromethane, fluorotrichloromethane, difluorodichloromethane, and 1,1,2,2-tetrafluoro-1,2-dichloroethane. Gases which may be liquified under pressure and used as propellants include hydrocarbon gases such as propane or butane and mixtures thereof. Gases which may be used under pressure as propellants include amongst others carbon dioxide and nitrous oxide. Water/hydrocarbon or water/fluorochlorocarbon emulsions such as butane/water or di-fluorodichloromethane/water emulsions may also be used as propellants.

A liquid aerosol formulation may contain an additional co-solvent which is less volatile than the solvent and includes suitable distilled petroleum fractions such as kerosene. The arthropodicidal liquid pressure packed formulations of this invention may comprise from (0.001—5%) of a killing pyrethroid, from (0.001—5%) of a knock down pyrethroid, optionally from (0.010—20%) of a pyrethroid synergist, from (0.005—10%) of the Compound, from (0—99.5%) of a suitable propellant, from 0—99.5%) of a suitable solvent and from (0—40%) of a suitable co-solvent.

The preferred compositions of this invention comprise (0.005—3%) of a killing pyrethroid, from (0.005—1%) of a knock-down pyrethroid, optionally from (0.005—3%) of a pyrethroid synergist and from (0.2—2%) of the Compound.

The following Examples illustrate aspects of this invention but in no way are to be construed as a limitation thereof:

## Example 1

*Spray formulations*

|  | (a) | (b) |  |
|---|---|---|---|
| kadethrin | 0.0025 | 0.25 | parts by weight |
| decamethrin | 0.0050 | 0.25 | „  „  „ |
| The Compound | 0.375 | 5.00 | „  „  „ |
| Xylene | 2.500 | 4.00 | „  „  „ |
| Odourless kerosene to | 100 vols. | 100 | vols. |

|  | (a) | (b) |  |
|---|---|---|---|
| kadethrin | 0.0025 | 0.01 | parts by weight |
| permethrin | 0.025 | 0.10 | „  „  „ |
| The Compound | 0.750 | 5.50 | „  „  „ |
| Xylene | 2.500 | 5.00 | „  „  „ |
| Kerosene to | 100 vols | 100 | vols |

**0 001 454**

### Example 2

*Dusting Powder Formulations*

| | | |
|---|---|---|
| kadethrin | 0.05 | parts by weight |
| decamethrin | 0.02 | „ „ „ |
| The Compound | 0.35 | „ „ „ |
| Talc | 99.58 | „ „ „ |
| | 100.00 | |

| | | |
|---|---|---|
| kadethrin | 0.02 | parts by weight |
| permethrin | 0.20 | „ „ „ |
| The Compound | 1.10 | „ „ „ |
| Talc | 98.68 | „ „ „ |
| | 100.00 | |

### Example 3

*Miscible Oil Formulations*

| | | |
|---|---|---|
| kadethrin | 8.0 | parts by weight |
| decamethrin | 12.0 | „ „ „ |
| The Compound | 20.0 | „ „ „ |
| Emulsifying agent | 20.0 | „ „ „ |
| Xylene | 40.0 | „ „ „ |
| | 100.0 | |

| | | |
|---|---|---|
| kadethrin | 1.0 | parts by weight |
| permethrin | 10.0 | „ „ „ |
| The Compound | 10.0 | „ „ „ |
| Emulsifying agent | 20.0 | „ „ „ |
| Xylene | 59.0 | „ „ „ |
| | 100.0 | |

### Example 4

*Wettable Powder Formulations*

| | | |
|---|---|---|
| kadethrin | 2.5 | parts by weight |
| decamethrin | 5.0 | „ „ „ |
| The Compound | 15.0 | „ „ „ |
| Dispersant | 3.0 | „ „ „ |
| Wetter | 1.0 | „ „ „ |
| Fine Silica | 73.5 | „ „ „ · |
| | 100.0 | |

4

## Example 4 (cont.)
### *Wettable Powder Formulations*

| | | |
|---|---|---|
| kadethrin | 1.5 | parts by weight |
| permethrin | 15.0 | „ „ „ |
| The Compound | 8.5 | „ „ „ |
| Dispersant | 3.0 | „ „ „ |
| Wetter | 1.0 | „ „ „ |
| Fine Silica | 71.0 | „ „ „ |
| | 100.0 | |

## Example 5

*Irritant effect test*

Six volunteers were exposed for 4 minutes to the atomized spray of an oil-based, pressure-packed formulation (A) comprising 0.025% kadethrin, 0.038% bioresmethrin, 0.25% piperonyl butoxide and 0.50% of the Compound. The number of volunteers responding 1 hour after exposure was noted. The response was assessed twice by repeating the experiment and then compared with the response of the same panel of volunteers exposed twice to a control formulation (B) comprising 0.025% kadethrin, 0.038% bioresmethrin and 0.25% piperonyl butoxide.

The results are illustrated in Table 1.

### TABLE 1

| Formulation | % active ingredient in pack | | | |
|---|---|---|---|---|
| | kadethrin | bioresmethrin | piperonyl butoxide | The Compound |
| B | 0.025 | 0.038 | 0.25 | — |
| A | 0.025 | 0.038 | 0.25 | 0.50 |

| Formulation | Test | Approx mg/m$^3$ | Av. % positive response | | % of panel responding 1 hour after exposure | | | | |
|---|---|---|---|---|---|---|---|---|---|
| | | | Nose | Throat | S | R | T | U | D |
| B | 1 | 0.04 [a] | 43 | 13 | 50 | 84 | 50 | 17 | 00 |
| | 2 | 0.03 [a] | 39 | 13 | 50 | 66 | 33 | 17 | 17 |
| A | 1 | 0.03 [a] | 15 | 6 | 50 | 50 | 0 | 0 | 0 |
| | 2 | 0.04 [a] | 15 | 4 | 33 | 50 | 0 | 0 | 17 |

Key:

(a) = mg of kadethrin /m$^3$ of air in test room

D = dry mouth

S = sneezing

R = runny nose

T = tongue tingling

U = unpleasant smell

5

Example 6

*Pressure-packed Formulations*

|  | % w/w | |
| --- | --- | --- |
|  | (a) | (b) |
| kadethrin | 0.0250 | 0.030 |
| bioresmethrin | 0.0625 | 0.045 |
| piperonyl butoxide | 0.2500 | 0.300 |
| The Compound | 0.5000 | 0.300 |
| Xylene | 0.2500 | 0.300 |
| Odourless kerosene | 18.9125 | 1.425 |
| Emulsifying agent | — | 1.000 |
| Nonyl phenol ethylene oxide condensate | — | 0.300 |
| White spirit | — | 1.300 |
| Water | — | 57.000 |
| 50/50 Trichlorofluoromethane/ dichlorodifluoromethane | 80.0000 | — |
| Butane/Propane mixture | — | 38.000 |
|  | 100.0000 | 100.000 |

## Claims

1. A composition comprising a pyrethroid selected from kadethrin and decamethrin as a first component and bis-(2,3,3,3-tetrachloro-*n*-propyl)ether as a second component.

2. A composition according to claim 1 wherein the ratio of pyrethroid to bis-(2,3,3,3-tetrachloro-*n*-propyl)ether is in the range of from 1:0.5 to 1:50 w/w.

3. A composition according to claim 1 wherein the pyrethroid is kadethrin.

4. A composition according to claim 3 which also includes a killing pyrethroid.

5. A composition according to claim 4 wherein the killing pyrethroid is selected from decamethrin, bioresmethrin, permethrin and P-phenothrin.

6. A composition according to claim 1 wherein the pyrethroid is decamethrin.

7. A composition according to claim 6 which also includes a knock-down pyrethroid.

8. A composition according to claim 7 wherein the knock-down pyrethroid is selected from kadethrin, bioallethrin and S-bioallethrin.

9. A composition according to any one of claims 1 to 8 which includes a pyrethroid synergist.

10. A composition according to claim 9 wherein the pyrethroid synergist is selected from piperonyl butoxide, piprotal, sulfoxide, propyl isome and octylbicycloheptenedicarboximide.

11. A formulation comprising a composition as defined in any one of claims 1 to 10 together with an inert carrier therefor.

12. A method of controlling Arthropod pests comprising the application of a composition as defined in any one of claims 1 to 10 to the pest or to its environment.

13. A method of controlling Arthropod pests comprising the application of a formulation as defined in claim 11 to the pest or to its environment.

14. A method according to claim 12 or 13 for the control of flying or crawling Insect pests.

6

**0 001 454**

**Patentansprüche**

1. Mittel enthaltend ein Pyrethroid aus der Gruppe Kadethrin und Decamethrin als ersten Bestandteil und Bis(2,3,3,3-tetrachlor-n-propyl)-äther als zweiten Bestandteil.

2. Mittel nach Anspruch 1, worin das Verhältnis von Pyrethroid zu Bis(2,3,3,3-tetrachlor-n-propyl)-äther im Bereich von 1:0,5 bis 1:50 Gew./Gew. liegt.

3. Mittel nach Anspruch 1, worin das Pyrethroid Kadethrin ist.

4. Mittel nach Anspruch 3, welches zusätzlich ein abtötendes Pyrethroid enthält.

5. Mittel nach Anspruch 4, worin das abtötende Pyrethroid aus der Decamethrin, Bioresmethrin, Permethrin und p-Phenothrin umfassenden Gruppe ausgewählt ist.

6. Mittel nach Anspruch 1, worin das Pyrethroid Decamethrin ist.

7. Mittel nach Anspruch 6, welches zusätzlich ein Knockdown-Pyrethroid enthält.

8. Mittel nach Anspruch 7, worin das Knockdown-Pyrethroid aus der Kadethrin, Bioallethrin und S-Bioallethrin umfassenden Gruppe ausgewählt ist.

9. Mittel nach einem der Ansprüche 1 bis 8, welches einen Pyrethroid-Synergisten enthält.

10. Mittel nach Anspruch 9, worin der Pyrethroid-Synergist aus der Piperonylbutoxid, Piprotal, Sulfoxid, Propylisom und Octylbicycloheptendicarboximid um assenden Gruppe ausgewählt ist.

11. Mittel nach einem der Ansprüche 1 bis 10, enthaltend zusätzlich einen inerten Träger.

12. Verfahren zur Bekämpfunf von Gliederfüßler-Schädlingen, umfassend den Auftrag eines Mittels nach einem der Ansprüche 1 bis 10 auf den Schädling oder seine Umgebung.

13. Verfahren zur Bekämpfung von Gliederfüßler-Schädlingen, umfassend den Auftrag eines Mittels nach Anspruch 11 auf den Schädling oder seine Umgebung.

14. Verfahren nach Anspruch 12 oder 13 zur Bekämpfung von fliegenden oder kriechenden Insekten-Schädlingen.


**Revendications**

1. Composition comprenant un pyréthroide choisi entre la kadéthrine et la décaméthrine comme premier constituant et de l'éther bis-(2,3,3,3-tétrachloro-n-propylique) comme second constituant.

2. Composition suivant la revendication 1, dans laquelle le rapport du pyréthroide à l'éther bis(2,3,3,3-tétrachloro-n-propylique) tombe dans l'intervalle de 1:0,5 à 1:50 poids/poids.

3. Composition suivant la revendication 1, dans laquelle le pyréthroide est la kadéthrine.

4. Composition suivant la revendication 3, qui contient également un pyréthroide létal.

5. Composition suivant la revendication 4, dans laquelle le pyréthroide létal est choisi entre la décaméthrine, la bioresméthrine, la perméthrine et la p-phénothrine.

6. Composition suivant la revendication 1, dans laquelle le pyréthroide est la décaméthrine.

7. Composition suivant la revendication 6 qui contient un pyréthroide d'étourdissement.

8. Composition suivant la revendication 7, dans laquelle le pyréthroide d'étourdissement est choisi entre la kadéthrine, la bioalléthrine et la S-bioalléthrine.

9. Composition suivant l'une quelconque des revendications 1 à 8, qui comprend un agent de synergie des pyréthroides.

10. Composition suivant la revendication 9, dans laquelle l'agent de synergie des pyréthroides est choisi entre le pipéronylbutoxyde, le piprotal, le sulfoxyde, la propylisome et l'octylbicycloheptène-dicarboximide.

11. Préparation qui comprend une composition telle que définie dans l'une quelconque des revendications 1 à 10 outre un excipient inerte.

12. Procédé pour lutter contre les arthropodes nuisibles qui comprend l'application d'une composition telle que définie dans l'une quelconque des revendications 1 à 10 sur l'arthropode nuisible ou son milieu.

13. Procédé pour lutter contre les arthropodes nuisibles qui comprend l'application d'une préparation telle que définie dans la revendication 11 sur l'arthropode nuisible ou son milieu.

14. Procédé suivant la revendication 12 ou 13 de lutte contre les insectes nuisibles volants ou grimpants.